**Europäisches Patentamt**

**European Patent Office**

**Office européen des brevets**

(19)

(11) Veröffentlichungsnummer: **0 109 590**
**B1**

(12) # EUROPÄISCHE PATENTSCHRIFT

(45) Veröffentlichungstag der Patentschrift:
**13.07.88**

(51) Int. Cl.⁴: **F 16 P 3/08**

(21) Anmeldenummer: **83111013.5**

(22) Anmeldetag: **04.11.83**

(54) Sicherheitstürverriegelung.

(30) Priorität: **18.11.82 DE 3242525**

(43) Veröffentlichungstag der Anmeldung:
**30.05.84 Patentblatt 84/22**

(45) Bekanntmachung des Hinweises auf die Patenterteilung:
**13.07.88 Patentblatt 88/28**

(84) Benannte Vertragsstaaten:
**CH DE LI SE**

(56) Entgegenhaltungen:
**DD - A - 101 218**
**DE - A - 2 928 507**
**DE - U - 7 607 709**
**FR - A - 2 233 558**
**FR - A - 2 245 474**
**FR - A - 2 330 950**

**BETRIEBSTECHNIK, Band 24, Nr. 3, März 1983, Seiten 7,50-51, Technischer Verlag Resch KG, Gräfelfing, DE; "Sicherheit, die man nicht überlisten kann" WERKSTATTTECHNIK, Band 69, Nr. 2, Februar 1979, Seiten 89-96; P. KNAUSS: "Sicherheit beim Bau und Betrieb von mechanischen Pressen" DIN 43697 DIN 43697**

(73) Patentinhaber: **Schunk Metall und Kunststoff GmbH, Hauptstrasse 97, D-6301 Wettenberg 1 (DE)**

(72) Erfinder: **Keil, Klaus, Beethovenstrasse 20, D-7022 Leinfelden-Echterdingen (DE)**
Erfinder: **Roth, Reinhold, Hüttenstrasse 74, D-4000 Düsseldorf (DE)**
Erfinder: **Kirschbaum, Berthold, Kaiser-Friedrich-Strasse 114, D-4040 Neuss 1 (DE)**

## Beschreibung

Die Erfindung betrifft eine Sicherheitstürverriegelung mit den Merkmalen des Oberbegriffs des Patentanspruchs 1.

Sicherheitstechnische Verriegelungen an Schutzeinrichtungen sind an sich bekannt, z.B. aus dem DIN-Blatt 31001. Bei dem Einsatz solcher Verriegelungen als Sicherheitstürverriegelung war es bisher nur möglich, die einzelnen Bauelemente der Verriegelung getrennt voneinander entsprechend dem Schiebeweg der Schutztür an der zu schützenden Einrichtung anzubringen. Die Verriegelungseinrichtung bestand dabei aus zwei Grenztastern, die mit Abstand voneinander an einer Seite der Tür zum Eingriff kamen und einer elektromechanischen Sperreinrichtung, die an der anderen Türseite in diese einrastete. Bei den bekannten Einrichtungen muss nach Einschalten der Spannung durch einen Hauptschalter oder nach Wiedereinschalten nach Spannungsausfall durch einen Steuerschalter jeder Grenztaster einmal betätigt werden, um ein unbefugtes Umgehen zu erschweren. Bei Sicherheitseinrichtungen nach dem Stand der Technik ist zusätzlich ein Schalter für das Öffnen und Schliessen der Tür erforderlich.

Dasselbe gilt auch für die aus der DE-B-2 329 964 bekannte elektromechanische Sicherheitsverriegelungseinrichtung. Diese ist darüber hinaus störanfällig, da man mit einem fremden Verriegelungsbolzen die Einrichtung manipulieren kann. Ausserdem ist die Einrichtung, die im Inneren eine Anzahl Hebel aufweist, störanfällig, da sich diese verklemmen können.

In dieser Einrichtung kommt ein sogenannter Mikroschalter mit Anschlussstiften als Lötansatz zur Anwendung. Dabei wirkt ein Stössel nicht unmittelbar auf eine Kontaktbrücke. Die Kontaktöffnungsweite beträgt bei solchen Mikroschaltern nur Zehntel-Millimeter. Diese bekannte Einrichtung ist somit nicht als Schaltgerät mit an der Schutztür in jeder Lage anliegendem Grenztaster, der unmittelbar auf die Schaltbrücke wirkt, einsetzbar.

Bei einer weiterhin aus der DE-B-2 550 204 bekannten Sicherheitseinrichtung mit einem Schutzgitter an hydraulisch betriebenen Maschinen, ist ein Schalter aussen am Schutzgitter angebracht und wird von Hand über einen Hebel betätigt, während ein zweiter Schalter intern an der hydraulischen Verriegelungseinrichtung montiert ist. Daraus ist kein Hinweis auf die Zusammenlegung zweiter Schalter einer Verriegelungsvorrichtung in einer kompakten Einheit gegeben.

Aufgabe der Erfindung ist es daher, eine Türverriegelungsvorrichtung zu schaffen, bei der alle Bauelemente der Sicherheitsvorrichtung und für das Öffnen und Schliessen der Tür als Baueinheit in einem Gehäuse vereinigt werden können. Dabei soll das Gehäuse, das zwei Grenztaster und einen Hubmagneten aufnimmt, anstelle des üblichen Schalters eingesetzt werden können.

Es soll also dessen Anschlussmasse haben, z.B. nach DIN 43697, so dass die Türverriegelung anstelle des bisher üblichen Schalters zum Ein- und Ausschalten einsetzbar ist. Statt dreier bisher an voneinander entfernten Orten anzubringender Bauteile soll somit nur ein Bauteil erforderlich sein.

Die zur Lösung der gestellten Aufgabe wesentlichen Merkmale der Erfindung sind im Patentanspruch 1 genannt. Die Unteransprüche nennen Ausführungsarten der Erfindung.

Der Anspruch 1 umfasst zwei Ausführungsformen, nämlich einmal die Ausführungsform «Unter Federdruck verriegelt», bei der der Verriegelungsbolzen unter nach aussen zur Tür hin gerichtetem Federdruck steht und andererseits die Ausführungsform: «Unter Strom verriegelt», bei der der Verriegelungsbolzen unter nach innen hin gerichteter Federkraft steht.

Die Zeichnung zeigt Ausführungsformen des neuen Schalters, und zwar in

Fig. 1 und 2 zueinander senkrechte Schnitte der Ausführungsform: «Unter Federdruck verriegelt», in

Fig. 3 und 4 entsprechende Schnitte der Ausführungsform: «Unter Strom verriegelt» und in

Fig. 5 ein Schaltbild für die Ausführungsform: «Unter Federdruck verriegelt» bzw. in Fig. 5a ein Teilschaltbild der Ausführungsform «Unter Strom verriegelt».

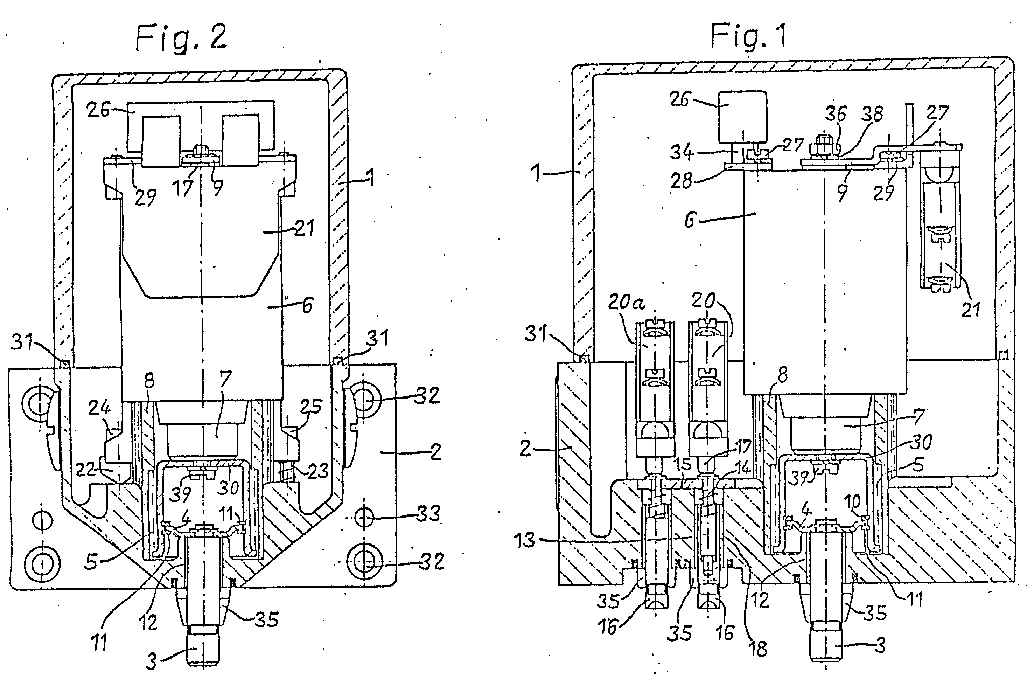

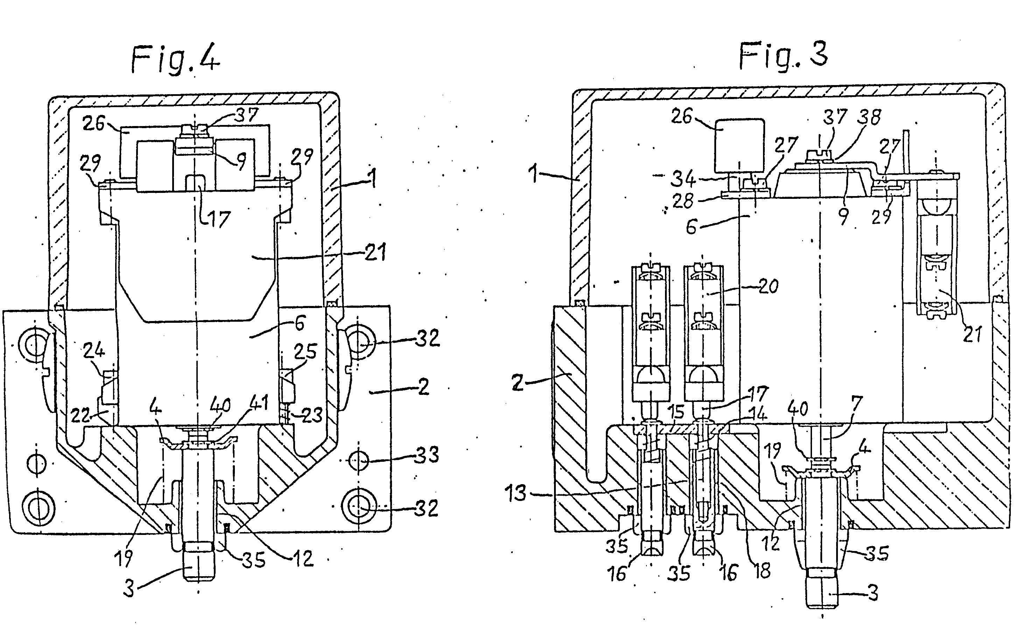

Das Gehäuse 2 eines üblichen Schalters (Fig. 1, 2) ist mit einem Deckel 1 mit Dichtung 31 versehen. An dem Gehäuse 2 befinden sich die üblichen Anschlussbohrungen 32 und Verstiftungsbohrungen 33.

An der zur Schutztür hin gerichteten Seite des Gehäuses ist der Verriegelungsbolzen 3 angeordnet, der in einer Hülse 12 geführt ist und mit einer Formscheibe 4 verbunden ist, die unter nach innen gerichtetem Druck einer Druckfeder 5 steht. Das ist dadurch erreicht, dass die Formscheibe 4 aussen über Sicherungsscheiben 10, 11 in einem Federlagertopf 30 befestigt ist. Die Feder 5 stützt sich am Gehäuse 2 über ein Abstandrohr 8 ab und liegt mit ihrem anderen Ende an einem umgebogenen Rand des Federlagertopfes 30 an. Dieser Federlagertopf 30 ist mit einer Schraube 39 an einem Ende des beweglichen Magnetankers 7 des Hubmagneten 6 befestigt. Am anderen Ende des Hubmagneten 7 bzw. eines Stössels am Hubmagneten 7 ist ein Bügel 9 als Grenztaster des zweiten Schalters 21 mit der Gewindemutter 36 und Scheibe 38 befestigt. Der Bügel 9 ist in einem Montagewinkel 29 geführt und kann mit seinem freien Ende auf dem Schalterstössel 17 (Fig. 2) des Schalters 21 aufliegen. Befestigungsschrauben 27 für den Hubmagnet 6 am Gehäuse 2 halten zugleich eine Tragplatte 28 mit Abstandrohr 34 für die elektrische Anschlussklemmleiste 26 bzw. den Montagewinkel 29.

An der gleichen Seite des Gehäuses 2 wie der Verriegelungsbolzen 3 ist der erste Grenztaster als Bolzen 13 mit Stössel 16 in einer Hülse 18 geführt. Er steht unter nach aussen gerichteter Federkraft einer Feder 14. Er ist von einer Platte 15 gehalten und stützt sich mit einem hinteren Rundkopf an dem Schalterstössel 17 des ersten Schalters 20 ab. Verriegelungsbolzen 3 und Stössel 16 sind durch Gummidichtungen 35 nach aussen abgedichtet. Der erste Schalter 20 und ein nur in Sonderfällen zur Ausübung zusätzlicher Sicherungsfunktionen angeordneter Zusatzschalter 20a sind am Gehäuse 2 an einer Seite über ein Futterstück 22 mit einer Zylinderschraube 24 und an der anderen Seite durch eine mit einer Druckfeder 23 ausgerüstete Gewindeschraube 25 einstellbar gehalten.

Die Ausführungsform nach Fig. 3 und 4: «Unter Strom verriegelt» weist zu Fig. 1 und 2 den Unterschied auf, dass der Magnet 6 um 180° verschwenkt eingebaut ist, so dass der Hubmagnet 7, dessen Hubweg durch eine Sicherungsscheibe 40 begrenzt ist, und der mittels einer Schraube 37 und Scheibe 38 mit dem Bügel 9 verbunden ist, bei eingeschalteter Spannung in Richtung auf die Tür hin vorgeschoben ist. In diesem Falle ist die mit einer Sicherungsscheibe 41 am Verriegelungsbolzen 3 gehaltene Formscheibe 4 durch die Druckfeder 19 am Gehäuse 2 abgestützt. Der Verriegelungsbolzen 3 steht somit unter nach innen gerichtetem Federdruck aufgrund der Druckfeder 19. Der Federlagertopf mit Sicherungsscheiben und auch das Abstandsrohr 8 gemäss Fig. 1 entfallen hierbei. Um die Feder 19 können jedoch Rohre zur Federsicherung angeordnet sein.

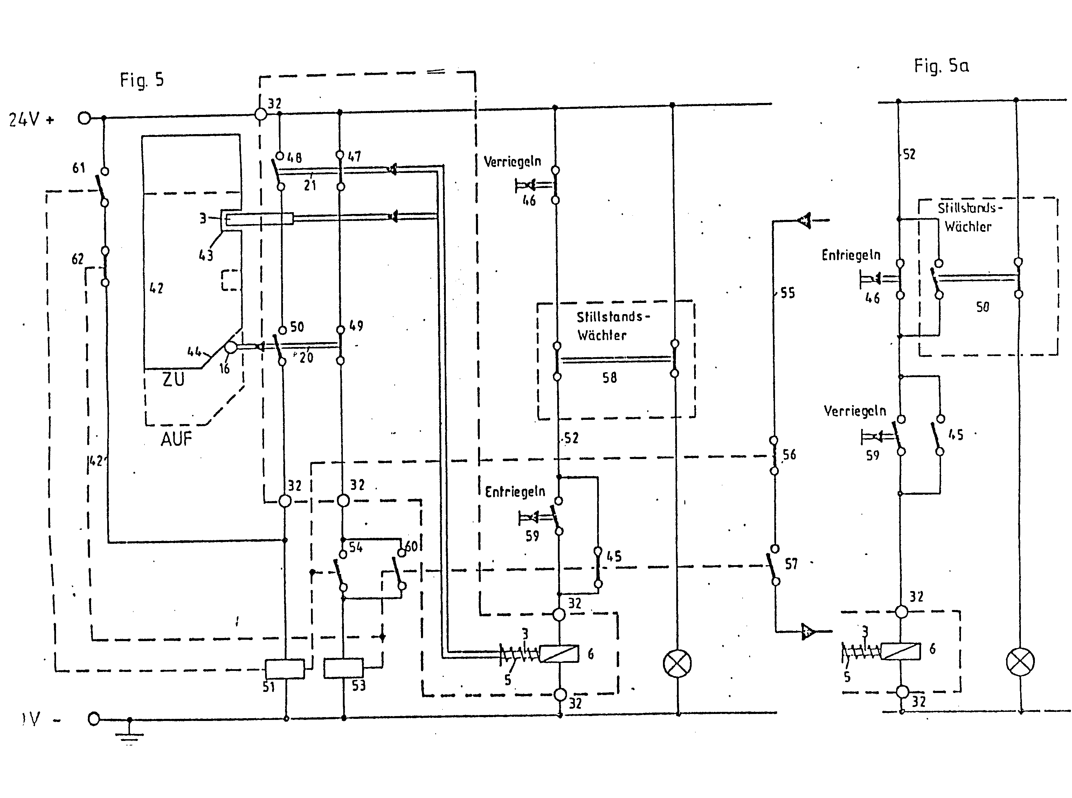

Die Wirkungsweise der Türverriegelung wird nachstehend für die Ausführungsform «Unter Federkraft verriegelt» anhand der Schaltung nach Fig. 5 erläutert. Fig. 5a zeigt demgegenüber die Änderung im Strompfad 52 für die Ausführungsform: «Unter Strom verriegelt». Die Sicherheitstür 42 weist eine Verriegelungsöffnung 43 auf, in die der Verriegelungsbolzen 3 hineinragt, der durch den eingezogenen Magnetanker 7 des Hubmagneten 6 entriegelbar ist. Verriegelt, also ausgefahren, wird der Verriegelungsbolzen 3 durch eine innen und aussen geführte Druckfeder 5, die bei Federbruch voll ihre Funktion beibehält, da sie sich nicht ineinanderschieben kann.

Der Grenztaster am ersten Schalter 20 wird über den Stössel 16 betätigt, der durch eine Schrägfläche 44 oder einen Nocken an der Schutztür 42 schaltbar ist.

Wird die Versorgungsspannung bei gestrichelt dargestellter geöffneter Schutztür 42 eingeschaltet, zieht der Hubmagnet 6 über den Schalter 45 und den Taster «Verriegeln» 46 an. Dadurch gelangt der Schalter 21 als zweiter Grenztaster, der mit dem Hubmagneten 6 mechanisch gekoppelt ist, in die Stellung «Schutztür offen», wobei der Öffner 47 geöffnet und der Schliesser 48 geschlossen werden. Durch die Schrägfläche 44 an der Schutztür 42 ist weiterhin der Schalter 20 als Reihengrenztaster und erster Grenztaster betätigt, wobei der Öffner 49 auf und der Schliesser 50 geschlossen ist, so dass über die Schliesser 48, 50 ein Relais 51 anzieht und über seinen Schliesser 61 den Öffner 62 in Selbsthaltung geht und den Schalter 54 schliesst.

Die Schutztür wird nun geschlossen, so dass der Öffner 49 des Schalters 20 über die Schrägfläche 44 und den Stössel 16 geschlossen wird und der Schliesser 50 öffnet.

Beim Betätigen des Tasters «Verriegeln» 46 wird der Strompfad 52 zu dem Hubmagneten 6 unterbrochen und der Magnet 6 fällt ab. Durch die Druckfeder 5 wird der Verriegelungsbolzen 3 in die Verriegelungsöffnung 43 gedrückt und der Schalter 21 umgeschaltet, so dass der Öffner 47 geschlossen und der Schliesser 48 offen ist. Ein Relais 53 zieht jetzt über Öffner 47 und 49 und einen Schliesser 54 an. Dadurch wird der Öffner 62 geöffnet und damit das Relais 51 stromlos und fällt ab. Durch das Schliessen des Schliessers 60 bleibt das Relais 53 beim Öffnen des Kontaktes 54 angezogen. Ist die Schutztür 42 verriegelt, wird der Strompfad 55 für die Freigabe der gefahrbringenden Bewegung stromführend. Der Öffner 56 und der Schliesser 57 sind geschlossen.

Fällt zu diesem Zeitpunkt die Versorgungsspannung aus, bleibt die Schutztür verriegelt, und das Relais 53 fällt ab. Dadurch, dass das Relais 53 beim Ausfall der Versorgungsspannung abfällt, wird durch dessen Schliesser 57 der Strompfad zur Freigabe 55 unterbrochen und durch dessen Öffner 45 der Strompfad 52 des Hubmagneten 6 durchgeschaltet. Beim Wiedereinschalten der Spannung ist somit der Strompfad 55 zur Freigabe unterbrochen, während die Schutztür 42 entriegelt wird. Ist beim Stromausfall die gefahrverursachende Maschine noch in Bewegung, was durch den als Stillstandswächter eingesetzten Schalter 58 simuliert wird, so bleibt die Schutztür auch beim Wiedereinschalten der Spannung so lange verriegelt, bis die gefährliche Bewegung beendet wurde. Danach wird die Schutztür selbsttätig entriegelt, wobei die Freigabe der Bewegung nach dem Stromausfall unterbrochen bleibt.

Bei normalem Betrieb, bei dem die Schutztür verriegelt ist, kann, wenn die Maschine zum Stillstand gekommen ist, der Schalter 58 also den Stillstand anzeigt, die Schutztür durch Betätigen des Tasters «Entriegeln» 59 entriegelt werden. Dabei wird durch das Öffnen des Öffners 47 das Relais 53 stromlos und somit der Schliesser 57 im Strompfad 55 der Freigabe geöffnet. Um die Schutztür nun wieder verriegeln zu können, muss diese erst geöffnet werden, damit der Schalter 20 betätigt und damit das Relais 51 aktiviert wird (Schliesser 48 und 50 geschlossen). Damit ist gewährleistet, dass beim Ausfall des Schalters 20 oder 21 keine Freigabe der gefährlichen Bewegung erfolgen kann.

Die Türverriegelung kommt bei jeder Leitungsunterbrechung, bei jedem Stromausfall und bei Ausfall der Grenztaster stets in einen gefahrlosen Zustand. Sie kann entweder bei einem Ausfall nicht verriegelt werden, und damit bleibt der Strompfad für Freigabe stromlos oder, wenn ein Ausfall im verriegelten Zustand auftritt, kann sie nicht entriegelt werden solange die gefährliche Bewegung anhält.

Bei Eintritt eines die Sicherheit gefährdenden Fehlers tritt also folgendes ein:

a) Beim Stromausfall bei geöffneter Schutztür fällt der Verriegelungsbolzen 3 aufgrund der Kraft der Druckfeder 5 in die Stellung «Verriegelt». Die Schutztür kann nicht verschlossen werden. Die Relais 51 und 53 sind abgefallen. Der Strompfad 55 zur Freigabe der gefahrbringenden Bewegung bleibt unterbrochen, auch beim Wiedereinschalten. Wenn wiederum Spannung vorhanden ist, zieht der Hubmagnet 6 an, damit auch der Schalter 21. Der Schliesser 48 ist geschlossen und das Relais 51 zieht an, so dass die Ausgangsposition wieder hergestellt ist.

b) Bei Stromausfall bei verriegelter Schutztür wird die Freigabe für die Bewegung durch Abfall des Relais 53 aufgehoben. Die Schutztür 42 bleibt verriegelt. Die Verriegelung wird erst bei Stillstand und Wiedereinschalten der Spannung aufgehoben. Ein Wiederverriegeln und eine Freigabe der gefährlichen Bewegung kann nur nach Öffnen und Schliessen der Schutztür erfolgen.

c) Bei Kabelbruch der +24 Volt Zuleitung kann ein Durchschalten des Strompfads «Freigabe» 55 nicht erfolgen, oder die Freigabe wird aufgehoben, da das Relais 53 in jedem Falle stromlos wird. Bei Kabelbruch der –0 Volt Rückleitung wird der Hubmagnet 6 stromlos. Er kann nicht entriegelt werden bzw. bei geöffneter Schutztür nicht verriegelt werden.

Bei Kabelbruch der Steuerleitung von Schliesser 48, 50 zu Relais 51 kann die Schutztür 42, wenn das Relais 51 in Selbsthaltung ist, verriegelt werden. Danach ist keine Verriegelung mit einer Freigabe mehr möglich, da die Relais 53 und 51 abgefallen sind. Bei Kabelbruch der Leitung von Öffner 47, 49 zum Relais 53 wird die Freigabe sofort aufgehoben bzw. sie wird nicht erteilt. Die Schutztür bleibt verriegelt. Bei Kabelbruch der Leitung vom Taster «Entriegeln» 59 zum Hubmagneten 6 bleibt die Schutztür verriegelt.

d) Bei Ausfall der Mechanik bleibt der Grenztaster 21, der von der Mechanik des Magneten 6 und des Stössels 7 nicht betätigt. Dadurch kann keine Verriegelung der Tür 42 und Freigabe der gefährlichen Bewegung erfolgen.

e) Ein Bruch der Verriegelungsfeder wirkt sich, da eine Sicherheitsfeder eingesetzt ist, nicht störend aus.

f) Ein Defekt am Hubmagneten 6, der für eine 100%ige Einschaltdauer ausgelegt ist, führt nur dann zur Freigabe, wenn die Schutztür geschlossen ist. Bei geöffneter Schutztür erfolgt keine Freigabe, da der Schalter 20 betätigt ist.

Bezugszeichenliste
1 Deckel
2 Gehäuse
3 Verriegelungsbolzen
4 Formscheibe
5 Druckfeder
6 Hubmagnet
7 Magnetanker -(bolzen)
8 Abstandrohr
9 Bügel
10 Sicherungsscheibe
11 Sicherungsscheibe
12 Führungsbuchse
13 Bolzen
14 Druckfeder
15 Platte
16 Stössel am Schalter 20
17 Stössel am Schalter 20 und 21
18 Hülse
19 Druckfeder
20 erster Schalter
20a Zusatzschalter
21 zweiter Schalter
22 Futterstück
23 Druckfeder
24 Zylinderschraube
25 Gewindeschraube
26 Anschlussklemmleiste
27 Befestigungsschraube
28 Trägerplatte
29 Montagewinkel
30 Federlagertopf
31 Dichtung
32 Anschlussbohrung
33 Verstiftungsbohrung
34 Abstandrohr
35 Gummidichtung
36 Gewindemutter
37 Schraube
38 Scheibe
39 Schraube
40 Sicherungsscheibe
41 Sicherungsscheibe
42 Schutztür
43 Verriegelungsöffnung
44 Schrägfläche
45 Relaiskontakt zu Spule 53 (Öffner)
46 Taster: Verriegeln
47 Öffner des Schalters 21
48 Schliesser des Schalters 21
49 Öffner des Schalters 20
50 Schliesser des Schalters 20
51 Relaisspule
52 Strompfad
53 Relaisspule
54 Relaiskontakt zu Relaisspule 51 (Schliesser)
55 Strompfad
56 Relaiskontakt zu Relaisspule 51 (Öffner)
57 Relaiskontakt zu Spule 53 (Schliesser)
58 Stillstandwächter
59 Taster: Entriegeln
60 Relaiskontakt zu Spule 54 (Schliesser)
61 Relaiskontakt zu Spule 51 (Schliesser)
62 Relaiskontakt zu Spule 54 (Öffner)

**Patentansprüche**

1. Sicherheitstürverriegelung zum Schutz vor gefahrbringenden Bewegungen an einer Fertigungseinrichtung, insbesondere einer Bearbeitungsmaschine, bei der die ggfs. als Schutzgitter ausgebildete Schutztür (42) bei der gefahrbringenden Bewegung mit Hilfe von Grenztaster und einer elektromechanischen Sperreinrichtung verriegelt, bzw. die gefahrbringende Bewegung beim Öffnen und in offener Lage der Schutztür zwangsläufig abgeschaltet ist, bei der die Grenztaster und die elektromechanische Sperreinrichtung in einem Gehäuse (2) zu einer Baueinheit zusammen-

7     0 109 590     8

gefasst sind, bei der die Stössel (16) der Grenztaster unter Federkraft in Richtung der Schutztür stehen mit zwangsläufiger Kontaktöffnung z.B. über eine Schrägfläche (44) an der Schutztür, und bei der die elektromechanische Sperreinrichtung ein in eine Verriegelungsöffnung (43) der Schutztür einführbarer unter Federkraft stehender Verriegelungsbolzen (3) ist, dadurch gekennzeichnet, dass der unter der zur Schutztür (42) hin gerichteten Federkraft stehende Stössel (16) in jeder Lage der Schutztür (42) mit dieser in Eingriff ist, und der ausschliesslich durch Feder- oder Magnetkraft bewegbare Verriegelungsbolzen (3) mit einem Grenztaster in Form eines die Stellung des Magnetankers (7) der Hubmagneten (6) abtastenden Bügels (9) mit einem weiteren Schalter (21) mit zwangsläufiger Kontaktöffnung mechanisch gekoppelt ist, und der Bügel (9) mit dem Verriegelungsbolzen (3) über den beweglichen Magnetanker (7) des Hubmagneten (6) mit dem Verriegelungsbolzen (3) eine bewegliche Einheit bildet.

2. Verriegelung nach Anspruch 1, dadurch gekennzeichnet, dass in dem Gehäuse (2) z.B. mit Anschlussmassen eines üblichen Schaltergehäuses nach DIN 43697, etwa mittig der Hubmagnet (6) und an einander gegenüberliegenden Seiten davon je einer der Schalter (20, 21) mit Grenztaster untergebracht ist.

3. Verriegelung nach Anspruch 1 oder 2, dadurch gekennzeichnet, dass die Verbindung des Magnetankers (7) mit dem Verriegelungsbolzen (3) über einen – von einer an einem Abstandrohr (8) abgestützten Druckfeder (5) – unter nach aussen gerichteter Federkraft stehendem Federlagertopf (30) und eine aussen am Federlagertopf (30), innen am Verriegelungsstössel (3) feste Formscheibe (4) gebildet ist, wobei der Hubmagnet (6) so angeordnet ist, dass der Magnetanker (7) bei Stromdurchgang durch den Hubmagneten in Richtung auf den Bügel (9) verschoben wird und damit den Verriegelungsbolzen in Richtung auf das Gehäuse (2) zieht (Fig. 1).

4. Verriegelung nach Anspruch 1 oder 2, dadurch gekennzeichnet, dass die Verbindung des Magnetankers (7), der mit seinem freien Ende an dem freien Ende des Verriegelungsbolzens im Gehäuseinneren anliegt, mit dem Verriegelungsbolzen (3) über eine am Verriegelungsbolzen feste Formscheibe (4) gebildet ist, die durch eine sich am Gehäuse (2) abstützende Druckfeder (19) unter nach innen gerichteter Federkraft gehalten ist, wobei der Hubmagnet (6) so angeordnet ist, dass der Magnetanker (7) bei Stromdurchgang durch den Hubmagneten in Richtung auf den Verriegelungsbolzen (3) verschoben wird und damit den Verriegelungsbolzen (3) nach aussen drückt (Fig. 3).

5. Verriegelung nach einem der Ansprüche 1 bis 4, dadurch gekennzeichnet, dass der zweite Schalter (21) mit solchem Abstand zwischen Bügel (9) und Schalterstössel (17) angeordnet ist, dass der Schalterstössel (17) in der Verriegelungsstellung des Verriegelungsbolzens (3) den Öffnerkontakt (47) des zweiten Schalters (21) – erst kurz bevor der Verriegelungsbolzen (3) seine Endstellung in der Verriegelungsöffnung (43) erreicht hat – öffnet, wodurch mit Sicherheit eine etwa nicht erfolgte Verriegelung erfasst ist.

6. Verriegelung nach einem der Ansprüche 1 bis 5, dadurch gekennzeichnet, dass die Druckfeder (5, 14, 19) als Sicherheitsfeder derart ausgebildet ist, dass die Feder an ihrer Innenseite um ein Rohr, z.B. den Federlagertopf (30) herum, an diesem anliegend geführt ist und an ihrer Aussenseite in einem Rohr, z.B. dem Abstandsrohr (8) liegt, wobei die Feder so ausgeführt und/oder angeordnet ist, dass im eingebauten Zustand die Abstände benachbarter Windungen der Feder voneinander kleiner sind als der Durchmesser des Federdrahtes, so dass ein Ausbiegen oder Ineinanderverwinden der Federstücke nach einem Bruch mit Sicherheit ausgeschlossen ist.

7. Verriegelung nach einem der Ansprüche 1 bis 6, dadurch gekennzeichnet, dass die Druckfedern (5, 19) so ausgebildet sind, dass sie nicht nur Rückstellfeder für den Verriegelungsbolzen (3), sondern auch Rückstellfeder für den Magnetanker (7) sind.

8. Verriegelung nach einem der Ansprüche 1 bis 7, dadurch gekennzeichnet, dass die Befestigungsschrauben (27) für den Magnetanker (6) am Gehäuse (2) zugleich den Montagewinkel (29) für den zweiten Schalter (21) und eine Trägerplatte (28) mit Abstandrohr (34) für die elektrische Anschlussklemmleiste (26) befestigen.

9. Verriegelung nach einem der Ansprüche 1 bis 8, dadurch gekennzeichnet, dass der Verriegelungsbolzen (3) und der Betätigungsstössel (16) aussen durch je einen Dichtungsbalg (35) abgedichtet sind.

**Claims**

1. Safety door interlocking system for protection from hazardous motion in a production apparatus, particularly a processing machine, wherein the protective door (42) possibly taking the form of a protective grid, is locked during the motion by the aid of limit scanners and an electromechanical locking device or the motion is automatically stopped when the protective door is being opened or is open, the limit switches and the electromechanical locking device being combined in one housing (2) to form an assembly in which push rods (16) of the limit scanners are spring-biased in the direction of the protective door with an automatic contact opening action, for example via an angled surface (44) on the protective door, while the electromechanical locking device comprises a spring-biased locking bolt (3) insertable into a locking aperture (43) of the protective door, characterised by the fact that the push rod (42) which is spring-loaded towards the protective door (42) is engaged by the protective door (42) regardless of the position of this latter, and the locking bolt (3) movable solely by spring force or magnetic force is mechanically coupled to a limit switch in the form of a strap (9) scanning the position of the armature (7) of the lifting magnet (6) with a further switch (21) with automatic contact

5

opening, and the strap (9) with the locking bolt (3) forms through the movable armature (7) of the lifting magnet (6) a movable unit with the locking bolt (3).

2. Interlocking system in accordance with Claim 1, characterised by the fact that in the housing (2) for example having the dimensions of a customary switch housing according to DIN 43697, the lifting magnet (6) is accommodated approximately in the middle while one of the switches (20, 21) with limit scanner is situated at each of the two opposite sides thereof.

3. Interlocking system in accordance with Claim 1 or 2, characterised by the fact that the connection of the magnet armature (7) with the locking bolt (3) is provided through a spring bearing pot (30) spring-biased outwards and a pressure spring (5) supported on a spacer tube (8) and through a shaped disc (4) firmly resting on the outside against the spring bearing pot (30) and on the inside against the bolt (3), the lifting magnet (6) being so arranged that the magnet armature (7), when current passes through the said lifting magnet, is displaced in the direction of the strap (9), thus drawing the locking bolt towards the housing (2) (Figure 1).

4. Interlocking system in accordance with any one of Claims 1 to 3, characterised by the fact that the pressure spring (5, 14, 19) is constructed as a safety spring in such a way that the inside of the spring rests around a tube, for example the spring bearing pot (30), while the outside thereof is situated in a tube such as the spacer tube (8), the spring being so designed and/or arranged that when it is installed the distance between adjacent turns of the spring are smaller than the diameter of the spring wire so that if the spring breaks there is no danger that the pieces will be bent out of shape or twisted with one another.

5. Interlocking system in accordance with any one of Claims 1 to 4, characterised by the fact that the second switch (21) is situated at a distance between the strap (9) and the push rod (17) of the switch such that the push rod (17) of the switch, when the locking bolt (3) occupies the locking position, only opens the opener contact (47) of the second switch (21) shortly before the locking bolt (3) has reached the end position in the locking aperture (43), any omission of a locking operation thus being reliably detected.

6. Interlocking system in accordance with any one of Claims 1 to 5, characterised by the fact that the pressure spring (5, 14, 19) is constructed as a safety spring in such a way that the interior of the spring passes around a tube, for example the spring bearing pot (30), resting against it, while the exterior rests in a tube, for example the spacer tube (8), the spring being so designed and/or arranged that in its built-in state the distances between adjacent turns of the spring are smaller than the diameter of the wire of the spring, thus eliminating any risk that the parts of the spring will become bent out of shape or twisted into one another.

7. Interlocking system in accordance with any one of Claims 1 to 6, characterised by the fact that the pressure springs (5, 19) are so designed that they form not only a restoring spring for the locking bolt (3) but also a restoring spring for the magnet armature (7).

8. Interlocking system in accordance with any one of Claims 1 to 7, characterised by the fact that the securing screws (27) for the armature (6) or the housing (2) at the same time secure the angle mount (29) for the second switch (21) and a supporting plate (28) with a spacer tube (34) for the electrical terminal strip (26).

9. Interlocking system in accordance with any one of Claims 1 to 8, characterised by the fact that the locking bolt (3) and the actuating push rod (16) are sealed off towards the outside by a bellows-type sealing device (35).

**Revendications**

1. Verrouillage de sécurité de portes destiné à la protection vis-à-vis de mouvements dangereux d'un dispositif de fabrication, notamment d'une machine d'usinage, dans lequel la porte de protection (42) éventuellement constituée sous forme d'une grille de protection est verrouillée à l'aide de palpeurs de fin de course et d'un dispositif de verrouillage électromécanique pendant le mouvement dangereux, ou dans lequel le mouvement dangereux est obligatoirement arrêté en cas d'ouverture de la porte de protection ainsi que dans la position ouverte de celle-ci, les palpeurs de fin de course et le dispositif de verrouillage électromécanique étant rassemblés sous forme d'un ensemble unitaire dans un boîtier (2) dans lequel les coulisseaux (16) des palpeurs de fin de course sont sollicités par une force élastique en direction de la porte de protection avec ouverture forcée des contacts, par exemple sur une surface oblique (44) de la porte de protection, et dans lequel le dispositif de verrouillage électromécanique est constitué par une tige de verrouillage (3) soumise à une force élastique et pouvant être introduite dans une ouverture de verrouillage (43) de la porte de protection, caractérisé en ce que le coulisseau (16) qui est soumis à la force élastique dirigée vers la porte de protection (42) est en contact avec la porte de protection (42) dans toute position de cette dernière, et la tige de verrouillage (3) comprenant un palpeur de fin de course ayant la forme d'un étrier (9) détectant la position de l'armature (7) de l'aimant de levage (6) et qui ne peut être déplacée qu'exclusivement par une force élastique ou magnétique est accouplée mécaniquement à un autre interrupteur (21) à ouverture de contact forcée, et l'étrier (9) relié à la tige de verrouillage (3) par l'intermédiaire de l'armature mobile (7) de l'aimant de levage (6) forme avec la tige de verrouillage (3) un ensemble unitaire mobile.

2. Verrouillage selon la revendication 1, caractérisé en ce que les interrupteurs respectifs (20, 21) à palpeur de fin de course sont disposés dans le boîtier (2), par exemple par des moyens de raccordement d'un boîtier d'interrupteur habituel selon DIN 43697, sensiblement au milieu de l'aimant de levage (6) et sur les côtés opposés de celui-ci.

3. Verrouillage selon l'une des revendications 1 et 2, caractérisé en ce que la liaison de l'armature (7) avec la tige de verrouillage (3) se fait par l'intermédiaire d'un appui élastique en forme de pot (30) soumis à la force dirigée vers l'extérieur d'un ressort de pression (5) s'appuyant sur une entretoise tubulaire (8) et d'un disque façonné (4) fixé à l'extérieur au palier élastique en forme de pot (30) et à l'intérieur à la tige de verrouillage (3), l'aimant de levage (6) étant disposé de telle sorte que l'armature (7) est repoussée en direction de l'étrier (9) lors du passage du courant dans l'aimant et que la tige de verrouillage est ainsi tirée en direction du boîtier.

4. Verrouillage selon l'une des revendications 1 et 2, caractérisé en ce que la liaison de l'armature (7), qui repose par son extrémité libre contre l'extrémité libre de la tige de verrouillage (3) à l'intérieur du boîtier, avec la tige de verrouillage (3) se fait par l'intermédiaire d'un disque (4), fixé sur la tige de verrouillage, soumis à la force dirigée vers l'intérieur d'un ressort de pression (19) s'appuyant sur le boîtier, l'aimant de levage (6) étant disposé de telle sorte que l'armature (7) est déplacée en direction de la tige de verrouillage (3) lorsque le courant traverse l'aimant et repousse ainsi la tige de verrouillage vers l'extérieur.

5. Verrouillage selon l'une des revendications 1 à 4, caractérisé en ce que le second interrupteur (21) est disposé entre l'étrier (9) et le poussoir de contact (17) de telle façon que le poussoir (17) n'ouvre le contact d'ouverture (47) du second interrupteur (21), lorsque la tige de verrouillage (3) est en position de verrouillage, que peu de temps avant que la tige de verrouillage (3) ait atteint sa position finale dans l'ouverture de verrouillage (43), ce qui permet de constater un verrouillage mal effectué.

6. Verrouillage selon l'une des revendications 1 à 5, caractérisé en ce que le ressort de pression (5, 14, 19) est conformé en ressort de sécurité de sorte qu'il est guidé par sa face interne autour d'un tube, par exemple l'appui élastique en forme de pot (30), en s'appuyant sur lui, et qu'il repose par sa face externe dans un tube, par exemple l'entretoise tubulaire (8), le ressort étant réalisé et/ou disposé de telle façon qu'à l'état monté, l'écart entre les spires voisines du ressort est plus faible que le diamètre du fil constituant le ressort, de sorte qu'un pliage ou un emmêlement des parties du ressort après une cassure est exclu de façon sûre.

7. Verrouillage selon l'une des revendications 1 à 6, caractérisé en ce que les ressorts de pression (5, 19) sont conformés de telle sorte qu'ils constituent non seulement des ressorts de rappel pour la tige de verrouillage (3) mais aussi des ressorts de rappel pour l'armature (7).

8. Verrouillage selon l'une des revendications 1 à 7, caractérisé en ce que les vis de fixation (27) pour l'armature (6) sur le boîtier (2) fixent en même temps l'equerre de montage (29) pour le second interrupteur (21) et une plaque de support (28) avec entretoise tubulaire pour la barrette de connexion (26).

9. Verrouillage selon l'une des revendications 1 à 8, caractérisé en ce que la tige de verrouillage (3) et le poussoir (16) sont étanchés vers l'extérieur chacun par un soufflet d'étanchéitè.

Fig.1

Fig.2

Fig.4

Fig.3

0 109 590

Fig. 5

Fig. 5a

24V +

Verriegeln

Stillstands-
Wächler

Entriegeln

Verriegeln

Stillstands-
Wächler

Entriegeln

ZU

AUF

0 109 590

)V -